# EUROPEAN PATENT APPLICATION

(11) **EP 2 607 883 A1**
(43) Date of publication of application: **26.06.2013**
(21) Application number: 11194393.2
(22) Date of filing: 19.12.2011
(51) Int. Cl.: G01N 21/03

(54) **System for photometric measurement of liquids**

(71) Applicant: F. Hoffmann-La Roche AG, 4070 Basel (CH); Roche Diagnostics GmbH, 68305 Mannheim (DE)
(72) Inventor: Drechsler, Andreas, 6340 Baar (CH); Wahl, Hans-Peter, 79650 Schopfheim (DE); Kopp, Martin, 6333 Huenenberg See (CH)
(74) Representative: Curcio, Mario

(57) **Abstract**

Optical system comprising at least one cuvette (40') having a longitudinal axis (48) and side walls comprising outer walls and inner walls forming an inner space for receiving liquids. The system further comprises at least one optical window (60) for the photometric measurement of liquids located in the inner space, wherein the inner space, at least in the optical window and in a plane orthogonally to the longitudinal axis, has a substantially circular or elliptical cross-section (43'), and wherein the optical window comprises at least one lens (41',42') for correcting, within the boundaries of the optical window, deviations from an optical path of a light beam exiting the optical window caused by movements of the cuvette orthogonal to the optical path.

## Description

### FIELD OF THE INVENTION

This invention relates to the field of optical systems for photometric measurement of liquids, wherein the system comprises at least one cuvette comprising side walls forming an inner space for the measurement of liquids in an optical window. The invention relates also to a method of using said optical system.

### BACKGROUND OF THE INVENTION

Various types of tests related to patient diagnosis and therapy can be performed by analysis of a patient's liquid sample. For the analysis, such patient samples are typically placed in sample tubes, extracted from the tubes, combined with various reagents, incubated, and analyzed. In typical clinical chemical and immunochemical analyses, one or more assay reagents are added to a liquid sample, the sample-reagent combination is mixed and incubated within an optical cuvette. In the course of the reaction a change in optical transmission occurs due to variation of absorption, scattering or fluorescence of the sample. Normally, an optical system comprising an optical detector is used to carry out a photometric measurement before, during and/or after the reaction, e.g. the measurement of the optical transmission through the cuvette using a beam of light illuminating the sample-reagent mixtures in such optical cuvettes. The results are used to generate extinction or amplification data, which are the ratio between light intensity input and outlet through the sample. In this way, the presence and/or concentration of analytes in a sample, which may be indicative of a diagnostic condition, can be determined. Examples of such photometric measurements comprise turbidimetric, fluorometric and absorption measurements or the like.

For this purpose liquid containers such as optical cuvettes are used, which comprise a measurement chamber arranged between two transparent, planar and parallel walls, so that the optical length, i.e. the length of liquid being illuminated, is constant throughout the optical window and the optical extinction or amplification can be easily calculated.

It has been noted that cuvettes with an annular, e.g. cylindrical or rounded inner space are advantageous for certain aspects. In particular, due to the lack of edges, the capillary effect, which would lead a liquid to rise along the edges in case of wetting liquids, is reduced. The meniscus is thus more stabilized in case of annular cuvettes, i.e. the shape of the meniscus is less concave. This enables the use of smaller volumes while maximizing the volume of liquid being illuminated. Also, due to lack of edges, mixing is made easier, e.g. faster and more independent of the mixing method used, e.g. by stirring, shaking, etc... The formation of air bubbles, which may disturb the measurement is also minimized. Moreover, manufacturing cuvettes with a cylindrical or otherwise rounded inner space is easier and cheaper than cuvettes with planar and parallel walls.

Cuvettes with a rounded inner space have however not been used so far because the optical length varies throughout the optical window and therefore the measurement can be irreproducible and unreliable unless precise alignment of the cuvette in the optical system is achieved. Cuvettes with a rounded inner space are especially unsuitable in high-throughput optical systems adapted to carry out measurements with moving cuvettes.

A system for the photometric measurement of liquids is here introduced, which retains the above mentioned advantages of cuvettes with an annular cross-section and at the same time, does not require precise alignment in an optical path.

This is achieved by a system comprising a cuvette having inner walls with an annular cross-section and further comprising at least one lens arranged in an optical window, such that a pattern of light exiting from the cuvette after passing through the optical window remains substantially unchanged when the cuvette is moved orthogonally to the optical path within the limits of the optical window.

Precise alignment is therefore no longer needed. This makes positioning simpler and construction of the optical system cheaper, because the tolerances can be increased.

This new system can be advantageously used also when the cuvette is moved on purpose during the measurement, e.g. when a series of cuvettes is passed one after another through the optical path of an optical system and the photometric measurement is carried out on the fly, i.e. while the cuvettes are moving. In this way there is no need to stop the cuvette carrier for each measurement. The workflow can be thus simplified, the mechanical stress is reduced and the throughput is increased.

Another advantage is that washing of the cuvette is made easier if the cuvette is to be reused. Rounded inner walls are less likely to retain residuals compared to edged inner walls.

Another advantage is that with the system of the present invention most of mixing techniques are more efficient. The overall system may thus be faster, constructionally simpler, more compact and cheaper.

### DESCRIPTION OF THE INVENTION

An optical system for the photometric measurement of liquids is herein introduced. The system comprises at least one cuvette. The cuvette comprises side walls comprising outer walls and inner walls forming an inner space for receiving liquids. The term "cuvette" is herein used to indicate a vessel comprising a body at least in part optically transparent adapted to receive liquids in an inner space and to allow the photometric measurement of a liquid sample contained therein, i.e. the measurement of changes in optical transmission, such as absorbance and scattering, used in the optical analysis of analytes present in a sample. The cuvette is particularly suitable for analyzing biological liquid samples, in which one or more analytes of interest can be potentially found, such as body fluids like blood, serum, plasma, urine, milk, saliva, cerebrospinal fluid, etc... Samples may be analyzed as such or after being diluted with another solution or after having being mixed with reagents e.g. to carry out one or more diagnostic assays like e.g. clinical chemistry assays and immunoassays. The cuvette may be used in the performance of scattering assays to detect the result of a chemical or biological reaction or to monitor the progress of a chemical or biological reaction, e.g. in a coagulation assay, agglutination assay, turbidimetric assay. According to one embodiment the cuvette body comprises side walls, a closed bottom and an upper opening for allowing liquids to be introduced in the inner space formed by the side walls and the closed bottom. According to one embodiment the cuvette comprises at least one lip projecting outwards of the cuvette body in proximity of the upper opening. This lip may be convenient when handling the cuvette and/or for holding the cuvette in a cuvette holding position. According to one embodiment the cuvette is manufactured in one piece by injection moulding polymeric material. According to one embodiment the body comprises side walls and two openings to allow liquid to flow through. The cuvette may thus be embodied as a channel, tube or capillary flow-through vessel. The cuvette may have an inner volume in the millilitre or microliter range. According to one embodiment the volume is below 1 mL and is adapted to receive a volume of liquid below 0.5 mL. The cuvette has a longitudinal axis, which extends from the upper opening to the closed bottom or between two openings, e.g. parallel to the liquid flow direction in a flow-through cuvette, and which normally corresponds to an axis of symmetry of the cuvette.

The system further comprises at least one optical window for the photometric measurement of liquids located in the inner space. The inner space is formed by the inner walls and, at least in the optical window and orthogonally to the longitudinal axis, has an annular cross-section. The term "annular" refers to a substantially circular or elliptical geometry, wherein the term "substantially" more generally encompasses an area defined by an edgeless curved closed line resembling a circle or ellipse, comprising e.g. an oval shape.

An "optical window" is defined as a three-dimensional arrangement having a certain width (typically equal to or narrower than the width of the cuvette) and a certain height (typically shorter than the height of the cuvette), comprising an optical inlet and an optical outlet, wherein the optical inlet allows light from a light source located outside of the optical window to enter the inner space of the cuvette and to illuminate a liquid therein and wherein the optical outlet allows light transmitted through the liquid or emitted by the liquid to exit the optical window and to be detected by a detector located outside of the optical window. The optical window is made at least in part of an optically transparent material, wherein transparent refers to a wavelength range of interest, not necessarily to visible light. In particular, the optical window comprises at least one lens for correcting deviations from an optical path of a light beam exiting the optical window caused by movements of the cuvette orthogonal to the optical path, within the boundaries of the optical window. "Within the boundaries of the optical window" means that the optical window, in particular the optical inlet, is in a position, which allows light from a light source located outside of the optical window to enter the inner space of the cuvette and to illuminate a liquid located therein. "Correcting deviations from the optical path" of a light beam exiting the optical window means maintaining the area of illumination, also called field of view, on the surface of a detector sensor, substantially unchanged when the cuvette is moved orthogonally to the optical path within the boundaries of the optical window. The optical path is said to have been corrected even if the area of illumination has shifted on the surface of the optical sensor, i.e. if the light angle has changed but the surface of the optical sensor is still illuminated. This means that the same amount of light (intensity) is detected irrespective of the lateral movement of the cuvette as long as light from the light source enters the optical window.

The at least one lens may be an optical inlet lens, through which light from a light source located outside of the optical window is allowed to enter the inner space of the cuvette and to illuminate a liquid therein. The at least one lens may be an optical outlet lens, through which light transmitted through the liquid or emitted by the liquid is allowed to exit the optical window and to be detected by a detector located outside of the optical window. According to one embodiment the optical window comprises only an optical inlet lens, wherein the optical outlet of the optical window is not shaped as a lens. According to one embodiment the optical window comprises only an optical outlet lens, wherein the optical inlet of the optical window is not shaped as a lens. According to one embodiment the optical window comprises both an optical inlet lens and an optical outlet lens. It is to be understood that a liquid contained in the cuvette in the optical window also acts as a lens and that therefore its influence on deviations of light from the optical path is also taken into account when designing the optical inlet and optical outlet lenses, and that for different liquids with different refractive indexes a different design may be required. Also, since different materials have different refractive indexes, the material of the cuvette must be taken into account. The medium surrounding the cuvette should be also taken into account. The surrounding medium may be e.g. air or another gas or a liquid, e.g. water or oil, e.g. in case of cuvettes temperated in a liquid bath.. In general, the formula 1/f= 1/f1+1/f2+...1/fn may be used when designing the type of optical system according to the intended use, wherein f is the desired focal length of the optical system. In direction of the optical path, i.e. in direction of the light beam propagation, f1 is the focal length of the first surface of the optical inlet lens, f2 is the focal length of the second surface of the optical inlet lens and fn is the focal length of the second surface of the optical outlet lens, wherein between the second surface of the optical inlet lens with f2 and the second surface of the optical outlet lens with fn there may be one or more lens surfaces with respective focal length. Any one of the lens surfaces may have a focal length f1,2,n with an infinite value, equivalent to no refractive power. In particular, the following formulas can be used to calculate the focal length of each lens surface: f1=n2/(n2-n1)*R1 wherein n1 is the refractive index of the medium in front of the first surface of the optical inlet lens, n2 is the refractive index of the optical inlet lens, R1 is the radius of the first surface of the optical inlet lens; f2=n3/(n3-n2)*R2 wherein n2 is the refractive index of the optical inlet lens, n3 is the refractive index of the medium behind the second surface of the optical inlet lens, R2 is the radius of the second surface of the optical inlet lens, and analogously for focal lengths of increasing index number up to n.

The "refractive power" is the degree to which a lens surface or an optical system in general converges or diverges light.

According to one embodiment the optical system is a cuvette and the optical window is an integral part of the cuvette. Thus the at least one lens is an integral part of the cuvette, e.g. moulded in one constructional piece with the cuvette or fixed to the cuvette. According to one embodiment the cuvette comprises one lens on one wall and the optical window is formed between said lens and the opposite wall. According to one embodiment the cuvette comprises two lenses on two opposite walls and the optical window is formed between said two lenses.

According to one embodiment the outer walls are so designed that one outer wall or two opposite outer walls, at least in part, at least in the optical window, have a curved or Fresnel-like shape and the one or two lenses are formed by said outer wall or walls respectively combined with the shape of the inner walls forming an annular inner cross-section. In particular, the outer wall may be convex, thereby forming a convex-concave lens (if it is an optical inlet lens) and/or a concave-convex lens (if it is an optical outlet lens) either spheric or aspheric respectively or either circular or cylindrical respectively. The curvature of the outer wall is typically different from the curvature of the inner wall or inner cross-section. This means that the respective outer and inner curves are not concentric and/or have a different radius. For example, the walls of a tube-like cuvette with circular inner and outer walls are not considered as lenses in the sense of the present invention. If the cuvette has, e.g. at one side, concentric inner and outer walls, their refractive index is however to be also taken into account when designing the lens on the opposite side. The at least one lens may also be holographic.

According to one embodiment the optical system comprises a cuvette holder comprising at least one recess for holding at least one cuvette, at least in part, in the optical window, so that at least a part of the liquid contained therein can be illuminated. According to one embodiment the cuvette holder comprises at least one lens. According to one embodiment the cuvette holder comprises one lens on one side of the recess, i.e. either an optical inlet lens or an optical outlet lens, and the optical window is formed between said lens and the opposite side of the recess. According to one embodiment the cuvette holder comprises two lenses, i.e. both an optical inlet lens and an optical outlet lens, on two opposite sides of the recess and the optical window is formed between said two lenses. According to yet another embodiment the cuvette holder comprises at least one lens, e.g. an optical inlet lens or an optical outlet lens, and the cuvette comprises at least one lens, e.g. an optical outlet lens or an optical inlet lens respectively, defining the optical window. A lens integrated in the cuvette holder may be chosen from a group comprising cylindrical, Fresnel and holographic lenses.

According to one embodiment, wherein the cuvette holder comprises at least one lens, at least the outer wall of the cuvette facing that lens in the optical window is planar and substantially parallel to the longitudinal axis and/or to an opposite outer wall.

The cuvette holder may be embodied as a conveyor, e.g. a linear or rotor-like conveyor, moving in at least one direction or as a robotic arm capable of performing movements, driven by one or more electrical motors. According to one embodiment, the cuvette holder comprises an array of recesses, the recesses being located in the optical path one at a time according to an established assay sequence. According to a preferred embodiment the cuvette holder is assembled as a rotor comprising a plurality of recesses located at regular intervals to receive a plurality of cuvettes.

According to one embodiment, a cuvette and/or the cuvette holder is movable in a direction orthogonal to the optical path such that one cuvette at a time is brought in the optical path. In particular, the optical system may be configured such as to carry out a photometric measurement during the movement of the cuvette or of the cuvette holder orthogonally to the optical path. In this way there is no need to stop the cuvette or the cuvette holder for each measurement. The workflow can be thus simplified, the mechanical stress can be reduced and the throughput can be increased. This is made possible by having at east one lens in the optical window, that is at least one lens in each cuvette and/or at least one lens in each recess of the cuvette holder, which is moving together with the cuvette holder and the cuvette in the recess.

"Orthogonal or orthogonally to the optical path" is herein used to indicate a lateral movement of the cuvette, which may be linear, i.e. at 90 degrees or follow an arc or circle whose radius lies in the optical path.

According to one embodiment the optical system comprises an optical detector and a light source, wherein the cuvette and/or the cuvette holder are arranged such that light, preferably in the form of a light beam, is guidable in an optical path from the light source through the optical window to the detector.

The optical path is an optical arrangement, which makes it possible to guide light from the light source to the optical window and the light exiting the optical window to the detector. In particular the optical path may comprise components such as lenses, mirrors, apertures, filters, a shutter, a collimator, a mixing element such as a mixing rod, fiber optics, a dispersion element, etc... A dispersion element may be a transmission or reflection diffraction grating, and may be a scanning monochromator or a polychromator, which is configured to receive transmitted light and disperse it into multiple spectral components. A dispersion element may be also a refractive element, such as a prism.

A light source according to the invention is a unit within the optical system capable of emitting light of usable wavelength or wavelength range. The term "usable" refers to a selected wavelength or wavelength range, at which light guided through a sample can be used to measure analyte concentrations present in the sample.

The light source comprises at least one light emitting element. A light emitting element may be an electric powered radiation source such as an incandescent lamp, an electroluminescent lamp, a gas discharge lamp, an arc lamp, a high-intensity discharge lamp, a laser.

According to one embodiment the at least one light emitting element is a halogen lamp, which like all incandescent light bulbs, produces a continuous broad spectrum of light, from near ultraviolet to far infrared. According to another embodiment the at least one light emitting element is a light emitting diode or "LED".

According to one embodiment the light of the light source has the shape of a light beam. The light may be collimated before reaching the optical window. According to one embodiment the light beam has an area of intersection with the optical inlet which is smaller, e.g. between 2 and 10 times smaller than the area of the optical inlet. This means that the width of the boundaries of the optical window is 2 to 10 times the width of the light beam. In other words, the ratio between the width of the light beam and the width of the optical window is such that by moving the cuvette laterally for a distance, which is up to 2 to 10 times the width of the light beam, the light beam is still within the boundaries of the optical window.

An optical detector according to the present invention is a photodetector, which is a device that converts electro-magnetic energy into an electrical signal, including both single element and multi-element or array optical detectors. Thus an optical detector is a device capable of monitoring an optical electro-magnetic signal and providing an electrical outlet signal or response signal relative to a baseline signal indicative of the presence and/or concentration of an analyte in a sample being located in the optical path. Such devices include, for example, photodiodes, including avalanche photodiodes, phototransistors, photoconductive detectors, linear sensor arrays, CCD detectors, CMOS optical detectors, including CMOS array detectors, photomultipliers, and photomultiplier arrays. According to certain embodiments, an optical detector, such as a photodiode or photomultiplier, may contain additional signal conditioning or processing electronics. For example, an optical detector may include at least one pre-amplifier, electronic filter, or integrating circuit. Suitable pre-preamplifiers include integrating, transimpedance, and current gain (current mirror) pre-amplifiers. According to one embodiment, the detector is of the CCD or CMOS type. According to one embodiment, the detector is of the photodiode type.

The optical system may be a self-standing instrument or an integrated component within an analyzer or a module within an analytical system, assisting users with the detection, e.g. qualitative and/or quantitative optical evaluation of samples for diagnostic purpose. Examples of such an instrument are: a clinical chemistry analyzer, a coagulation chemistry analyzer, an immunochemistry analyzer, a urine analyzer, either as self-standing instrument or module within a system comprising a plurality of said modules, used to detect the result of chemical or biological reactions or to monitor the progress of chemical or biological reactions.

In particular, the optical system may comprise units assisting with the pipetting, dosing, mixing of samples and/or reagents, units for loading and/or unloading and/or transporting and/or storing sample tubes or racks comprising sample tubes, units for loading and/or unloading and/or transporting and/or storing reagent containers or cassettes. The optical system may comprise identification units comprising sensors, e.g. barcode readers. Alternative technologies such as RFID may also be used for identification.

The optical system may comprise a sample receiving unit for receiving samples to be assayed. Samples may be received for example in the form of tubes, e.g. blood collection tubes, or smaller tubes or vessels comprising sample aliquots. Samples may be arranged in single carriers or holders or racks for multiple samples.

According to one embodiment the optical system comprises a reagent holding unit for holding reagents to perform the assays. Reagents may be arranged for example in the form of containers or cassettes containing individual reagents or group of reagents, placed in appropriate receptacles or positions within a storage compartment or conveyor.

According to one embodiment the optical system comprises a cuvette feeding unit for feeding cuvettes to the cuvette holding unit.

According to one embodiment the optical system comprises at least one pipetting device for dispensing a liquid or liquids, such as samples and/or reagents, into the inner space of the cuvette and/or withdrawing a liquid or liquids, from the inner space of the cuvette. The pipetting device may comprise a reusable washable needle, e.g. a steel needle, or disposable pipette tips.

Typically, the pipetting device is operatively coupled to an automated positioning device for moving the pipette tip or needle with respect to the instrument and, e.g., may be mounted to a transfer head that can be moved in two directions of travel in a plane, e.g., by means of guiding rails and a third direction of travel orthogonal to the plane, e.g., by means of a spindle drive.

The optical system may comprise one or more incubation units for maintaining sample/reagent mixtures at a certain temperature during reaction. The optical system may comprise one or more wash stations for washing pipette tips or needles, mixing paddles, and one or more washing stations for washing the cuvettes.

The optical system may comprise a liquid mixing device for mixing a liquid or liquids contained in the inner space of the cuvette. The liquid mixing device may be a shaker to shake a cuvette comprising a liquid or a mixing paddle or an ultrasound generator to mix liquids in a cuvette or reagent container. According to one embodiment the liquid mixing device is a gas blowing device to blow a gas such as air or nitrogen or an inert gas into the inner space of the cuvette thereby obtaining mixing of the liquids contained therein.

The annular inner cross-section of the cuvette is particularly advantageous for washing the cuvette after use in case of reusing the cuvette and for obtaining more efficient mixing, i.e. faster and complete mixing also in case of small volumes, e.g. in the microliter range, when surface tension effects may be unfavourable to mixing.

The optical system may comprise a controlling unit, embodied e.g. as a programmable logic controller running a computer-readable program provided with instructions to perform operations in accordance with a process operation plan. The controlling unit may be set up to control for example any one or more of the following operation: loading and/or wasting and/or washing of cuvettes, loading of pipette tips, moving and/or opening of sample tubes and reagent cassettes, pipetting of samples and/or reagents, mixing of samples and/or reagents, washing pipetting needles or tips, washing mixing paddles, controlling of the light source, e.g. selection of the wavelength, controlling the detector, collecting/comparing/assessing measurement data, moving the cuvette holder to bring a new cuvette in the optical path or bringing a new cuvette into the cuvette holder after each measurement, etc... In particular, the controlling unit may comprise a scheduler, for executing a sequence of steps within a predefined cycle time. The controlling unit may further determine the order of samples to be measured according to the assay type, urgency, etc...

A method for the photometric measurement of liquids is also introduced herein. According to one embodiment, the method comprises the step of moving the cuvette and/or the cuvette holder orthogonally to the optical path during the photometric measurement. According to one embodiment, the method comprises the step of moving the at least one lens together with the cuvette thereby correcting, within the boundaries of the optical window, deviations from the optical path of a light beam exiting the optical window. The method may comprise the step of bringing one cuvette at a time and/or one recess at a time into the optical path so that the light source and the detector are aligned with the optical window, and more particularly so that the optical inlet is aligned with the light source and the optical outlet is aligned with the detector. The method may comprise the step of rotating a rotor carrying a plurality of cuvettes such that one cuvette at a time and with it an optical window at a time is brought in optical alignment with the light source and the detector. In particular, the rotor may rotate continuously so that cuvettes are moving nearly orthogonally to the optical path while performing a photometric measurement.

The method may comprise the step of introducing in the cuvette and in particular in the measurement chamber a pre-defined volume of liquid or to add one or more liquids until a pre-defined volume of liquid is reached.

Other and further objects, features and advantages of the invention will appear from the following description and accompanying drawings, which illustrate exemplary embodiments and serve to explain the principles of the invention more in detail.

### BRIEF DESCRIPTION OF THE DRAWINGS

FIG. 1 depicts schematically the behaviour of a state of the art cuvette with respect to a light beam when moving orthogonally to the optical path.
FIG. 2 depicts schematically the behaviour of a different type of cuvette with respect to a light beam when moving orthogonally to the optical path.
FIG. 3 depicts schematically the behaviour of a different type of cuvette with respect to a light beam when moving orthogonally to the optical path.
FIG. 4 depicts schematically an optical system according to the invention.
FIG. 5 depicts schematically an optical system comprising a cuvette holder comprising a plurality of cuvettes as shown in FIG. 4.
FIG. 6 depicts schematically another embodiment of optical system comprising a different type of cuvettes and lenses integrated in the cuvette holder.
FIG. 7 depicts schematically an embodiment similar to that of FIG. 6 but with a different type of lenses.
FIG. 8 depicts schematically another embodiment of optical system comprising one lens in the cuvette and one lens in the cuvette holder for each recess.
FIG. 9 shows in perspective and in cross-section an exemplary embodiment of a cuvette comprising lenses on two opposite side walls.
FIG. 10 depicts schematically an optical system comprising a light source and a detector and a method of using the optical system.
FIG. 11 is a different representation of FIG. 10 for enhanced clarity.

### DETAILED DESCRIPTION OF THE INVENTION

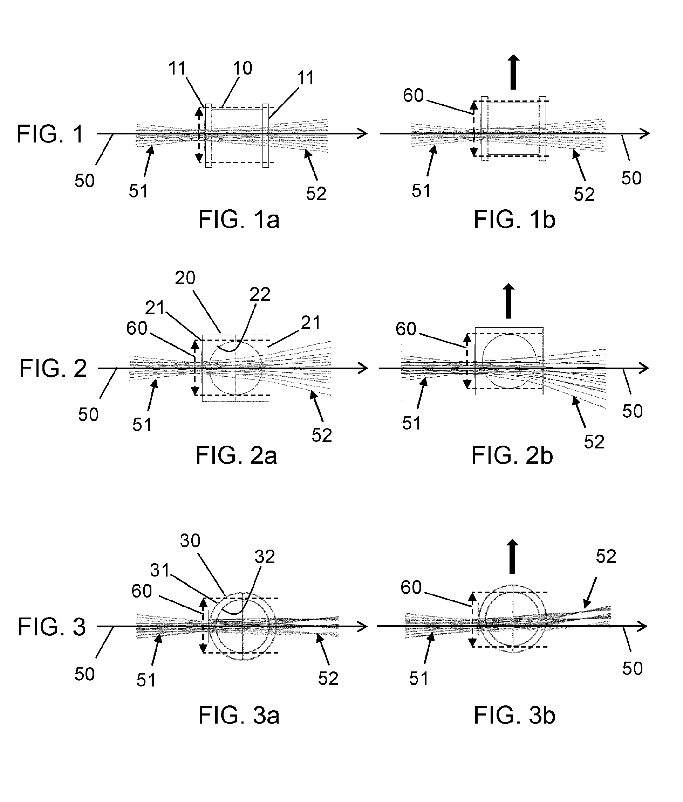

FIG. 1 depicts schematically a state of the art cuvette 10. The cuvette 10 comprises planar and parallel side walls 11, i.e. planar and parallel inner and outer walls on two opposite side walls 11, which define an optical window 60. In FIG. 1a the cuvette 10 is aligned with the optical path 50, meaning that the center of a light beam 51 is aligned with the center of the optical window 60. In this situation the exiting light beam 52 is symmetric with respect to the optical path 50. As depicted in FIG. 1b, when the cuvette 10 is moved orthogonally to the optical path 50 (indicated by an upwards arrow), but still within the boundaries of the optical window 60, meaning that the light beam 51 is still in the optical window 60, there are no deviations from the optical path 50 of the light beam 52 exiting the optical window 60 when compared to FIG. 1a. This is one main reason why cuvettes of this type are normally used.

FIG. 2 depicts schematically what happens in an analogous situation to that of FIG. 1 for another cuvette 20, wherein the outer walls 21 are still planar and parallel to each other but the inner cross-section 22 is annular. In FIG. 2a the cuvette 20 is aligned with the optical path 50. In this situation the exiting light beam 52 is symmetric with respect to the optical path, although with a diverging angle. As depicted in FIG. 2b, when the cuvette 20 is moved orthogonally to the optical path 50 (indicated by an upwards arrow), but still within the boundaries of the optical window 60, meaning that the light beam 51 is still in the optical window 60, the light beam 52 exiting the optical window 60 deviates from the optical path 50, in this case in a direction opposite to the direction of the movement. Due to this divergence, the exiting light beam 52 may not reach the detector (not shown) or reach the detector with a different intensity. One way to reduce this problem would be to reduce the distance from the detector, which is not always possible due to physical constraints, or to use a detector with a larger sensor area, which would be more expensive and also space consuming. This is one main reason why cuvettes with annular inner cross-section are normally not used.

FIG. 3 depicts schematically what happens in an analogous situation to that of FIG. 1 and 2 for another cuvette 30, wherein the outer walls 31 and the inner walls 32 are both annular and concentric, thereby forming a tube-like or capillary-like cuvette 30. In FIG. 3a the cuvette 30 is aligned with the optical path 50. In this situation the exiting light beam 52 is symmetric with respect to the optical path. As depicted in FIG. 3b, when the cuvette 30 is moved orthogonally to the optical path 50 (indicated by an upwards arrow), but still within the boundaries of the optical window 60, meaning that the light beam 51 is still in the optical window 60, the light beam 52 exiting the optical window 60 deviates from the optical path 50, in this case in the same direction of the movement. Also in this case, due to this divergence, the exiting light beam 52 may not reach the detector (not shown) or reach the detector with a different intensity.

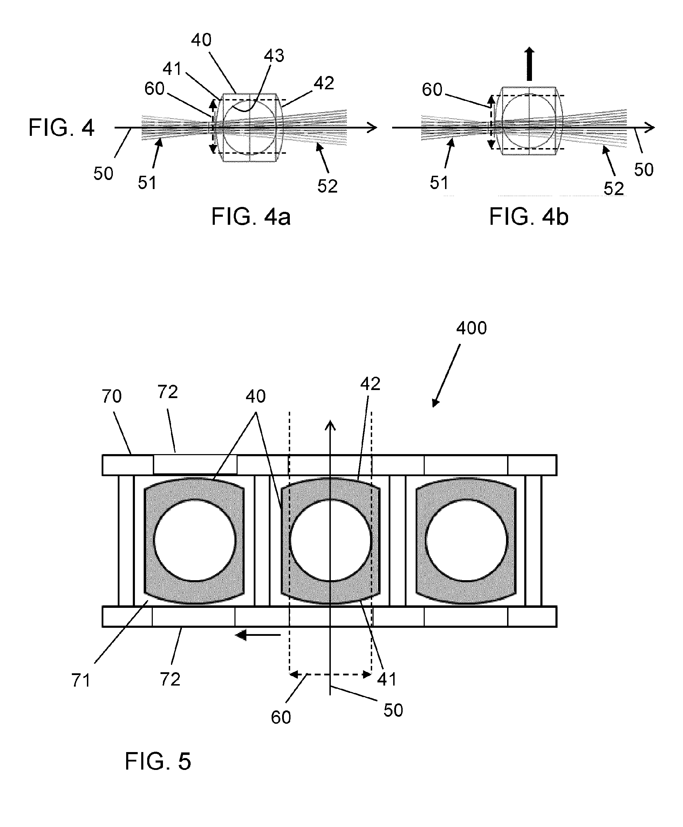

FIG. 4 depicts schematically an optical system 40 for the photometric measurement of liquids. The optical system 40 is a cuvette comprising an optical inlet lens 41, an optical outlet lens 42 and an annular inner cross-section 43. FIG. 4 shows what happens in an analogous situation to that of FIG. 1, 2 and 3 for the cuvette 40. In particular, the optical inlet lens 41 is formed by a curved outer wall of the cuvette 40 in the optical window 60, thereby forming a convex-concave lens together with the curved inner wall, wherein the curvature of the outer is different from the curvature of the inner wall. The optical outlet lens 42 is formed by a curved outer wall of the cuvette 40 in the optical window 60, thereby forming a concave-convex lens together with the curved inner wall, wherein the curvature of the outer wall is different from the curvature of the inner wall. In fact, in this particular embodiment, lens 41 and lens 42 are symmetric so that by rotating the cuvette 180 degrees about the longitudinal axis the optical outlet lens 42 can function as optical inlet lens 41 and the optical inlet lens 41 can function as optical outlet lens 42. In FIG. 4a the cuvette 40 is aligned with the optical path 50. In this situation the exiting light beam 52 is symmetric with respect to the optical path. As depicted in FIG. 4b, when the cuvette 40 is moved orthogonally to the optical path 50 (indicated by an upwards arrow), but still within the boundaries of the optical window 60, meaning that the light beam 51 is still in the optical window 60, there are no deviations from the optical path 50 of the light beam 52 exiting the optical window 60 when compared to FIG. 4a. Cuvette 40 has therefore an optical behaviour similar to cuvette 10 of FIG. 1 but with an annular inner cross-section 43 instead of planar and parallel side walls 11.

FIG. 5 depicts schematically an optical system 400 for the photometric measurement of liquids comprising a cuvette holder 70 comprising a plurality of recesses 71 holding a plurality of cuvettes 40 as shown in FIG. 4. Each recess 71 comprises two apertures 72 on two opposite sides. The recesses 71 and the cuvette 40 are designed such that the optical window 60 is aligned with the apertures 72 when the cuvette 40 is held in a recess 40 and such that the optical window 60 can be brought in the optical path 50. Alternatively, the cuvette holder 70 may be embodied as a frame, from which the cuvettes 40 may hang such that the optical window 60 of the cuvette 40 can be brought in the optical path 50. The cuvette holder 70 is here depicted as a linear array, and it is movable orthogonally to the optical path 50 such that one cuvette 40 at a time, specifically one optical window 60 at a time, can be brought in the optical path 50. The cuvette holder 70 may however be configured as e.g. a rotor with a plurality of cuvettes 40 regularly distributed, e.g. along its circumference such that one cuvette 40 at a time, specifically one optical window 60 at a time, can be brought in the optical path 50.

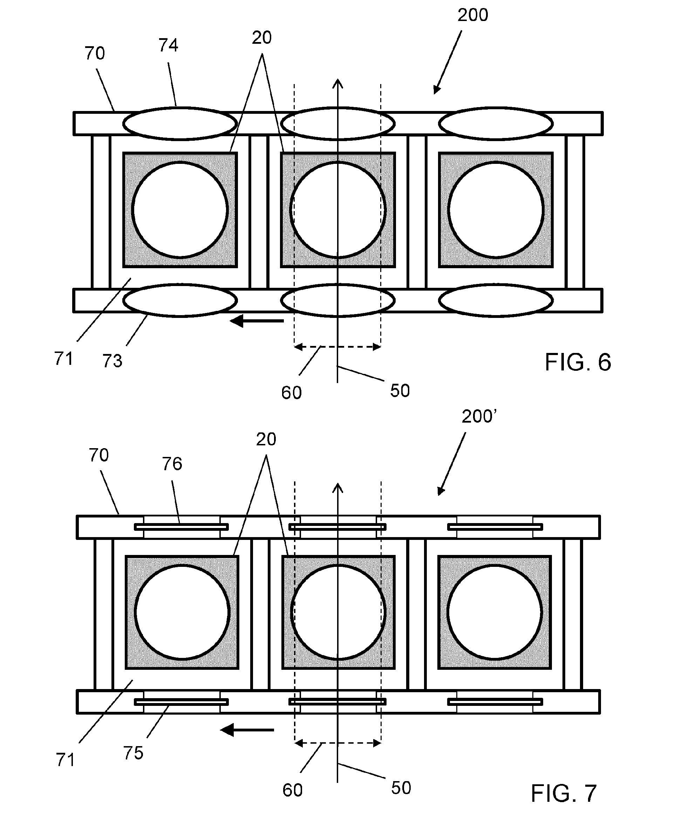

FIG. 6 depicts schematically another optical system 200 for the photometric measurement of liquids, which is a variant of the optical system 400. In particular, the optical system 200 comprises a cuvette holder 70 comprising a plurality of recesses 71 holding a plurality of cuvettes 20 of the type depicted in FIG. 2. Each recess 71 comprises an optical inlet lens 73 and an optical outlet lens 74 on two opposite sides, wherein the optical window 60 is comprised between these two lenses 73, 74. In particular, a part of the cuvette 20, comprising the liquid to be subjected to photometric measurement, is located in the optical window 60. The difference with the optical system 400 of FIG. 5 is that the optical inlet lenses 73 and the optical outlet lenses 74 are integrated in the cuvette holder 70 instead of the cuvettes 20. The optical inlet lenses 73 and the optical outlet lenses 74 are in this case cylindrical lenses.

FIG. 7 depicts schematically another optical system 200' for the photometric measurement of liquids, which is a variant of the optical system 200 of FIG. 6. In particular, the only difference from the optical system 200 is that the optical system 200' comprises optical inlet lenses 75 and outlet lenses 76 of the Fresnel-type integrated in the cuvette holder 70.

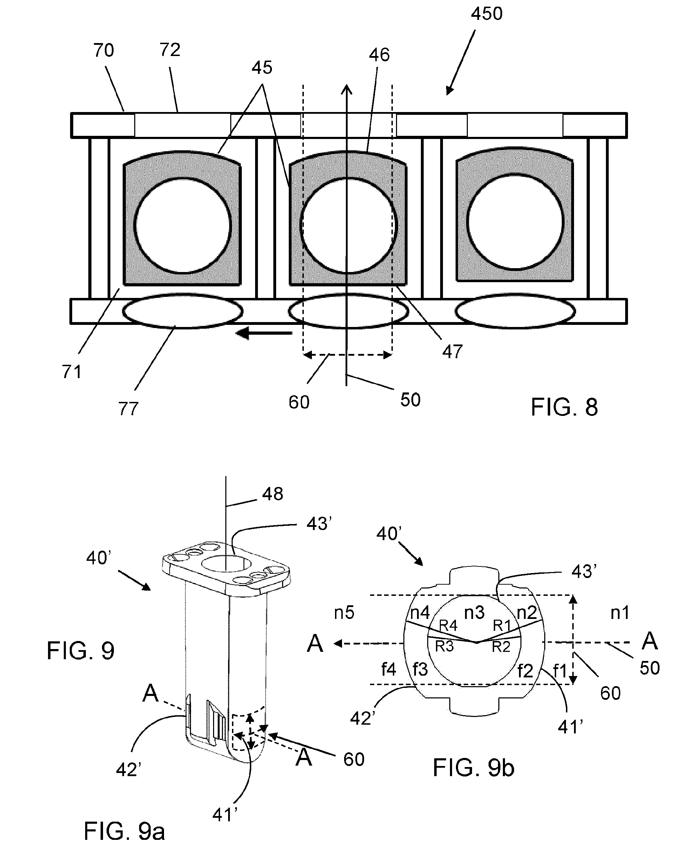

FIG. 8 depicts schematically another optical system 450 for the photometric measurement of liquids, which comprises features of the optical system 400 of FIG. 5 and the optical system 200 of FIG. 6. In particular, the optical system 450 comprises a cuvette holder 70 with one cylindrical optical inlet lens 77. The optical system 450 further comprises a cuvette 45, the cuvette 45 comprising a circular inner cross-section, a concave-convex optical outlet lens 46 and one planar opposite outer wall 47, wherein the optical window 60 is comprised between the optical inlet lens 77 and the optical outlet lens 46.

It has to be noted that, in all cases, the optical inlet lenses 41, 73, 75, 77 and the optical outlet lenses 42, 74, 76, 46 are movable together with the cuvette 40, 20, 45 if the cuvette moves, irrespective of the type of cuvette or the type of lenses and the number of lenses.

FIG. 9 shows in perspective (FIG. 9a) an exemplary embodiment of a cuvette 40' of the type shown in FIG. 4. The cuvette 40' has a longitudinal axis 48 and a circular inner cross-section 43'. FIG. 9b is a cross-sectional view of the cuvette 40' through a plane passing through the optical window 60 and through line A-A orthogonal to the longitudinal axis 48 and parallel to the optical path 50. The cuvette 40' comprises an optical inlet lens 41' and an optical outlet lens 42' formed by two opposite side walls in the optical window 60. The inner cross-section 43' is constant at least in the optical window 60 and has a diameter of 4 mm. This means that the radius R2 of the second surface of the optical inlet lens 41' and the radius R3 of the first surface of the optical outlet lens 42' are the same, i.e. R2=R3= 2mm. The radius R1 of the first surface of the optical inlet lens 41' and the radius R4 of the second surface of the optical outlet lens 42' is 6 mm, i.e. R1=R4=6mm. The distance between the outer walls in the center of the optical window 60, i.e. between the first surface of the optical inlet lens 41' and the second surface of the optical outlet lens 42' along the line A-A is 5 mm. The cuvette 40' is made of PolyMethylMethAcrylate (PMMA), which has a refractive index n2=n4 comprised between 1.45 and 1.55 (in the typical wavelength measurement range), e.g. 1.48 at 633 nm. The cuvette 40' is intended to receive in the inner space an aqueous liquid with a refractive index n3 comprised between 1.26 and 1.35 (liquid and wavelength dependent), e.g. with a refractive index n3 of 1.33 at 633 nm. Taking air as surrounding medium both in front of the first surface of the optical inlet lens 41' and behind the second surface of the optical outlet lens 42', the refractive index of the surrounding medium n1= n5 is approximately 1.

By using the formulas given above, the following focal lengths can be calculated. In particular, the focal length f1 of the first surface of the optical inlet lens 41' is 18.5 mm. The focal length f2 of the second surface of the optical inlet lens 41' is -35.5 mm. The focal length of the optical inlet lens 41' is therefore 38.6 mm. The focal length f3 of the first surface of the optical outlet lens 42' is 35.5 mm. The focal length f4 of the second surface of the optical outlet lens 42' is - 18.5 mm. Thus, the focal length of the optical outlet lens 42' is -38.6 mm. The refractive power of the whole optical system 40' is therefore infinite, leading e.g. to a collimated light beam 52 exiting the optical window 60, if the illuminating light beam 51 is collimated (not shown). The two surfaces of the optical inlet lens 41' reduce the diameter of the collimated illuminating light beam 51, generating a smaller collimated light beam that propagates through the center of the liquid in the cuvette 40'. The two surfaces of the optical outlet lens 42' reverse the scaling of the optical inlet lens 41', leading again to a collimated light beam 52 exiting the optical window 60 of the same width as the collimated illuminating beam 51 entering the optical window (not shown).

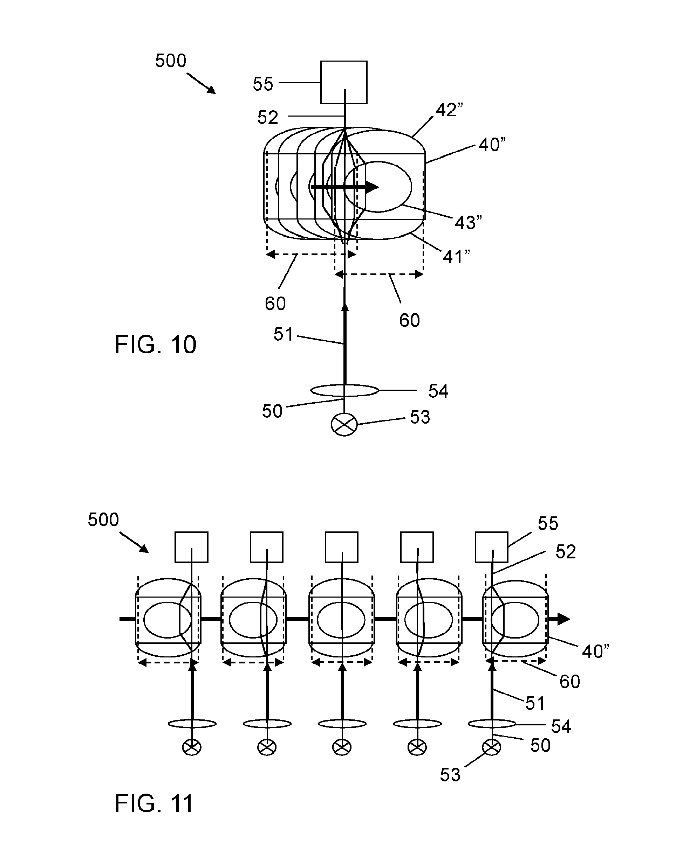

FIG. 10 depicts schematically an optical system 500 comprising a cuvette 40", a light source 53 and an optical detector 55. The cuvette 40" is similar to the cuvette 40 of FIG. 4 and the cuvette 40' of FIG. 9. In particular, the cuvette 40" comprises an optical inlet lens 41", an optical outlet lens 42" and an elliptical inner cross-section 43". Light 51 from the light source 53 is collimated via collimator 54. The cuvette 40" is movable in a direction orthogonal to the optical path 50 so that the optical window such as the light beam 51 can enter the optical window 60. FIG. 10 simulates this movement with a number of overlapping images from left to right, wherein a photometric measurement is carried out in the time frame during which the light beam 51 is in the optical window 60. It can be seen that as long as the light beam 51 is in the boundaries of optical window the light 52 exiting the optical window 60 always hits the detector 54 without deviating substantially from the optical path 50.

FIG. 11 is a different representation of FIG. 10, wherein the overlapping images have been depicted side by side for enhanced clarity.

The same or similar effect is achieved if the optical inlet lens 41" and optical outlet lens 42" are integrated with the cuvette holder (not shown in FIG. 10-11) so that they are movable together with the cuvette. The method therefore comprises the step of moving the optical inlet lens 41" and optical outlet lens 42" together with the cuvette thereby correcting, within the boundaries of the optical window 60, deviations from the optical path 50 of the light beam 52 exiting the optical window 60 caused by the movement of the cuvette orthogonal to the optical path 50.

Obviously many modifications and variations of the present invention are possible in light of the above description. It is therefore to be understood, that within the scope of the appended claims, the invention may be practiced otherwise than as specifically devised.

## Claims

1. Optical system (40, 40', 200, 200', 400, 450) for the photometric measurement of liquids, the system comprising
- at least one cuvette (20, 30, 40, 40', 40", 45) having a longitudinal axis (48) and side walls comprising outer walls and inner walls forming an inner space for receiving liquids,
- at least one optical window (60) for the photometric measurement of liquids located in the inner space,
wherein the inner space, at least in the optical window (60) and orthogonally to the longitudinal axis, has an annular cross-section (22, 32, 43, 43', 43 "), and wherein the optical window (60) comprises at least one lens (41, 42, 41', 42', 41", 42", 46, 73, 74, 75, 76, 77) for correcting, within the boundaries of the optical window (60), deviations from an optical path (50) of a light beam (51) exiting the optical window (60) caused by movements of the cuvette (20, 30, 40, 40', 40", 45) orthogonal to the optical path (50).

2. System according to claim 1 wherein the cuvette comprises one lens on one wall and the optical window is formed between said lens and the opposite wall or wherein the cuvette comprises two lenses on two opposite walls and the optical window is formed between said two lenses.

3. System according to claim 2 wherein one outer wall or two opposite outer walls, at least in part, have a curved or Fresnel-like shape and wherein the one or two lenses are formed by said outer wall or walls respectively combined with the annular inner cross-section.

4. System according to claim 3 wherein the outer wall is convex, thereby forming a convex-concave and/or a concave-convex lens either spheric or aspheric respectively, either circular or cylindrical.

5. System according to any of the claims 1 to 4 wherein the system further comprises a cuvette holder comprising at least one recess for holding at least one cuvette.

6. System according to claim 5 wherein the cuvette holder comprises one lens on one side of the recess and the optical window is formed between said lens and the opposite side of the recess or wherein the cuvette holder comprises two lenses on two opposite sides of the recess and the optical window is formed between said two lenses.

7. System according to claim 6 wherein the at least one lens is chosen from the group of cylindrical, Fresnel and holographic lenses.

8. System according to claim 6 or 7 wherein, at least in the optical window, at least one outer wall is planar and substantially parallel to the longitudinal axis and/or to an opposite outer wall.

9. System according to any of the preceding claims wherein the system comprises an optical detector and a light source, wherein the cuvette and/or the cuvette holder are arranged such that light is guidable in the optical path from the light source through the optical window to the detector.

10. System according to claim 9 wherein the cuvette and/or the cuvette holder is movable in a direction orthogonal to the optical path.

11. System according to any of the preceding claims wherein the system comprises a liquid mixing device for mixing a liquid or liquids contained in the inner space of the cuvette.

12. System according to claim 11 wherein the mixing device is a gas blowing device.

13. System according to any of the preceding claims wherein the system comprises a pipetting device for dispensing a liquid or liquids into the inner space of the cuvette and/or for withdrawing a liquid or liquids from the inner space of the cuvette.

14. Method for photometric measurement of liquids by using the system according to any of claims 1 to 13, the method comprising the step of moving the cuvette and/or the cuvette holder orthogonally to the optical path during the photometric measurement.

15. Method according to claim 14 comprising the step of moving the at least one lens together with the cuvette thereby correcting, within the boundaries of the optical window, deviations from the optical path of a light beam exiting the optical window from the optical path.
